# EUROPEAN PATENT APPLICATION

(11) **EP 4 621 909 A1**
(43) Date of publication of application: **24.09.2025**
(21) Application number: 23907813.2
(22) Date of filing: 21.12.2023
(51) Int. Cl.: H01M 10/0567, H01M 10/0569, H01M 4/38, H01M 4/48, H01M 10/052

(54) **LITHIUM SECONDARY BATTERY**

(30) Priority: 22.12.2022 KR 20220182375; 20.12.2023 KR 20230187436
(71) Applicant: LG Energy Solution, Ltd., Seoul 07335 (KR)
(72) Inventor: JEONG, You Kyeong, Daejeon 34122 (KR); HAN, Jun Hyeok, Daejeon 34122 (KR); AHN, Kyoung Ho, Daejeon 34122 (KR); OH, Young Ho, Daejeon 34122 (KR); KO, Yoon Seok, Daejeon 34122 (KR)
(74) Representative: Hoffmann Eitle
(86) International application number: PCT/KR2023/021274
(87) International publication number: WO 2024/136530

(57) **Abstract**

The present invention relates to a lithium secondary battery including a negative electrode, a positive electrode, a separator, and a non-aqueous electrolyte, wherein the negative electrode includes a negative electrode active material, the negative electrode active material includes a silicon-based active material, the silicon-based active material has an average particle diameter (D₅₀) of 1 µm to 20 µm, the non-aqueous electrolyte includes a lithium salt, an organic solvent, and an additive, the organic solvent includes fluoroethylene carbonate and diethyl carbonate in a volume ratio of 5:95 to 25:75, and the additive includes a compound represented by a specific chemical formula.

## Description

### [Technical Field]

### Cross-Reference to Related Application

This application claims priority to and the benefit of Korean Patent Application No. 10-2022-0182375, filed on December 22, 2022, the entire contents of which are incorporated herein by reference.

### Technical Field

The present invention relates to a lithium secondary battery, and more particularly, to a lithium secondary battery which includes a non-aqueous electrolyte including an additive capable of forming a robust SEI layer on the positive/negative electrode, thereby suppressing an increase in the initial resistance and improving output characteristics and lifetime performance.

### [Background Art]

With the growing dependence on electrical energy in our society along with the development of personal IT devices and computer networks in a developing information society, it is required to develop technologies to efficiently store and utilize electrical energy.

Among the developed technologies, secondary batteries are regarded as the most suitable for various purposes, and among secondary batteries, lithium secondary batteries are attracting great attention in that they can be miniaturized enough to be applied to personal IT devices and have the highest energy density.

Generally, lithium secondary batteries are manufactured by injecting a non-aqueous electrolyte into an electrode assembly, which is composed of a positive electrode, a negative electrode, and a porous separator, or impregnating the electrode assembly with a non-aqueous electrolyte.

As a positive electrode active material of the lithium secondary battery, the use of lithium-containing cobalt oxide, LiMnO₂ with a layered crystal structure, LiMn₂O₄ with a spinel crystal structure, lithium-containing nickel oxide (LiNiO₂), lithium nickel-cobalt-manganese transition metal oxide, and the like is being considered.

Meanwhile, as a negative electrode active material, carbon-based active materials such as graphite have been used, but recently, the use of silicon-based active materials is being considered due to having higher capacity than carbon-based active materials.

The silicon-based active material has high capacity, but there is a problem that the volume expansion/contraction is very large during the charging and discharging process. Such large volume expansion/contraction significantly reduces the conductivity of the negative electrode, causing a decrease in lifetime performance. In addition, during initial activation, a solid electrolyte interphase layer (hereinafter referred to as SEI layer) is formed on the surface of the negative electrode, but the silicon-based active material has a great deal of volume expansion, which causes cracks in the SEI layer and the continuous generation of negative electrode surfaces, and thus electrolyte side reactions are accelerated as the SEI layer formation reaction continuously occurs, and resistance is increased as the SEI layer becomes thicker.

### [Disclosure]

### [Technical Problem]

The present invention was devised to solve the problems and is directed to providing a lithium secondary battery, which includes a silicon-based active material as a negative electrode active material, with improved output characteristics and lifetime characteristics by forming a robust and low-resistance SEI layer on the negative electrode.

### [Technical Solution]

One aspect of the present invention provides a lithium secondary battery including a negative electrode, a positive electrode, a separator, and a non-aqueous electrolyte, wherein the negative electrode includes a negative electrode active material, the negative electrode active material includes a silicon-based active material, the silicon-based active material has an average particle diameter (D₅₀) of 1 µm to 20 µm, the non-aqueous electrolyte includes a lithium salt, an organic solvent, and an additive, the organic solvent includes fluoroethylene carbonate and diethyl carbonate in a volume ratio of 5:95 to 25:75, and the additive includes at least one selected from the group consisting of compounds represented by Chemical Formulas 1 to 3 below.

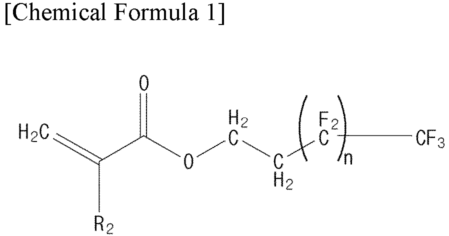

In Chemical Formula 1, R₁ is hydrogen or a C₁ to C₃ alkyl group, and n is an integer from 1 to 10.

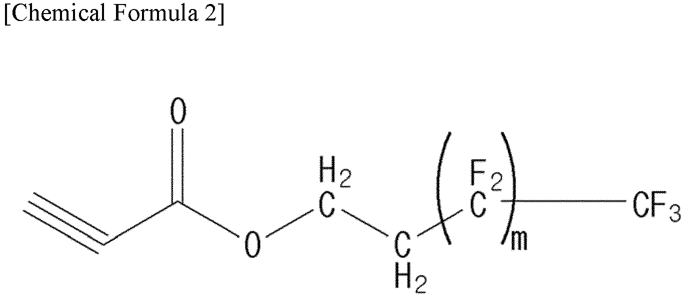

In Chemical Formula 2, m is an integer from 0 to 18.

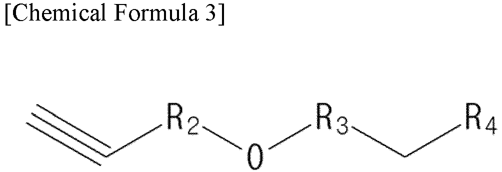

In Chemical Formula 3, R₂ and R₃ are each independently a C₁ to C₁₀ alkylene group, and R₄ is a C₁ to C₂₀ alkyl group substituted with one or more fluorine atoms.

### [Advantageous Effects]

The present invention relates to a lithium secondary battery, in which a negative electrode includes a silicon-based active material having a certain average particle diameter (D₅₀), a non-aqueous electrolyte includes fluoroethylene carbonate (FEC) and diethyl carbonate (DEC), as an organic solvent, in a certain volume ratio, and at least one selected from the group consisting of compounds represented by Chemical Formulas 1 to 3 is included as an additive. The silicon-based active material has a micro-sized average particle diameter, and since an organic/inorganic composite SEI layer can be easily formed on the negative electrode by the composition of the non-aqueous electrolyte, it is possible to prevent the SEI layer from cracking due to the volume change of the silicon-based active material, and thus lifetime performance at high temperatures and room temperature can be remarkably improved.

### [Modes of the Invention]

Before describing the present invention, terms and words used in this specification and claims should not be construed as limited to their conventional or dictionary meanings but should be construed as a meaning and concept consistent with the technical idea of the present invention based on the principle that the inventors can properly define the concept of terms in order to describe their invention in the best way.

The terms used herein are only used to describe exemplary embodiments and are not intended to limit the present invention. Singular expressions include plural expressions unless the context clearly indicates otherwise.

In this specification, the term "include," "provide," or "have" is intended to designate the presence of the implemented features, numbers, steps, elements, or combinations thereof, and it should be understood that it does not exclude in advance the presence or addition of other features, numbers, steps, elements, or combinations thereof.

In this specification, "%" means percent by weight unless explicitly stated otherwise.

Before describing the present invention, in the description of "Cₐ to C_{b}" herein, "a" and "b" are the number of carbon atoms contained in a particular functional group. In other words, the functional group may contain "a" to "b" carbon atoms.

In this specification, unless otherwise defined, the term "substitution" means that at least one hydrogen bonded to carbon is substituted with an element other than hydrogen, for example, with a C₁ to C₅ alkyl group or a fluorine atom.

In this specification, the average particle diameter (D₅₀) may be defined as the particle size corresponding to 50% of the cumulative volume in the particle size distribution curve. The average particle diameter (D₅₀) may be measured, for example, using a laser diffraction method. The laser diffraction method is generally used to measure particle diameters from the submicron region to several millimeters, and results with high reproducibility and high resolution can be obtained.

Hereinafter, the present invention will be described in detail.

### Lithium secondary battery

The present invention relates to a lithium secondary battery including a negative electrode, a positive electrode, a separator, and a non-aqueous electrolyte, wherein the negative electrode includes a negative electrode active material, the negative electrode active material includes a silicon-based active material, the silicon-based active material has an average particle diameter (D₅₀) of 1 µm to 20 µm, the non-aqueous electrolyte includes a lithium salt, an organic solvent, and an additive, the organic solvent includes fluoroethylene carbonate and diethyl carbonate in a volume ratio of 5:95 to 25:75, and the additive includes at least one selected from the group consisting of compounds represented by Chemical Formulas 1 to 3 below.

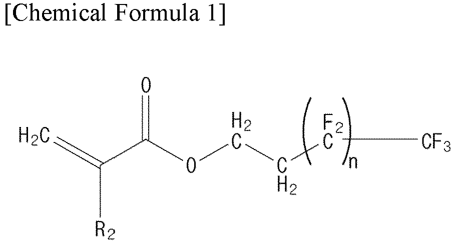

In Chemical Formula 1, R₁ is hydrogen or a C₁ to C₃ alkyl group, and n is an integer from 1 to 10.

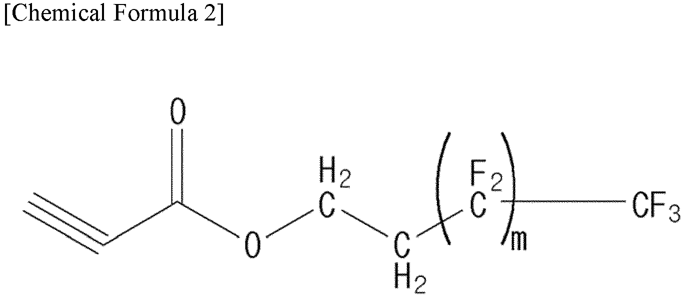

In Chemical Formula 2, m is an integer from 0 to 18.

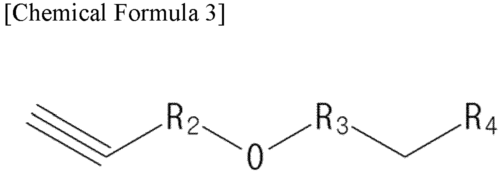

In Chemical Formula 3, R₂ and R₃ are each independently a C₁ to C₁₀ alkylene group, and R₄ is a C₁ to C₂₀ alkyl group substituted with one or more fluorine atoms.

The present invention relates to a lithium secondary battery, in which a negative electrode includes a silicon-based active material having a certain average particle diameter (D₅₀), a non-aqueous electrolyte includes fluoroethylene carbonate (FEC) and diethyl carbonate (DEC), as an organic solvent, in a certain volume ratio, and at least one selected from the group consisting of compounds represented by Chemical Formulas 1 to 3 is included as an additive. The silicon-based active material has a micro-sized average particle diameter, and since an organic/inorganic composite SEI layer may be easily formed on the negative electrode by the composition of the non-aqueous electrolyte, it is possible to prevent the SEI layer from cracking due to the volume change of the silicon-based active material, and thus lifetime performance at high temperatures and room temperature may be remarkably improved.

The lithium secondary battery includes: a negative electrode; a positive electrode; a separator; and a non-aqueous electrolyte. Specifically, the lithium secondary battery includes: a negative electrode; a positive electrode opposite the negative electrode; a separator interposed between the negative electrode and the positive electrode; and a non-aqueous electrolyte. The lithium secondary battery may be manufactured by accommodating an electrode assembly, which includes: the negative electrode; the positive electrode opposite the negative electrode; the separator interposed between the negative electrode and the positive electrode, in a battery case and then injecting the non-aqueous electrolyte.

### (1) Negative electrode

The negative electrode includes a silicon-based active material. The silicon-based active material has higher capacity than the carbon-based active material, but there is a problem in that the volume expansion/contraction according to the charging and discharging process is very large. However, when the silicon-based active material is used with the non-aqueous electrolyte, which will be described later, a highly flexible and durable SEI layer may be formed on the negative electrode, and thus it is possible to prevent electrolyte side reactions and provide a lithium secondary battery with improved lifetime performance and output characteristics.

The silicon-based active material may include a compound represented by Chemical Formula A below.

[Chemical Formula A] SiOₓ (0 ≤ x < 2)

In Chemical Formula A, considering that lithium cannot be stored because SiO₂ does not react with lithium ions, x is preferably within the above range.

The silicon-based active material may be silicon (Si). Si is advantageous in that its capacity is about 2.5 to 3 times higher than that of silicon oxide (such as SiOₓ (0<x<2)), but it is not easy to commercialize Si because the volume expansion/contraction due to the charging and discharging of Si is much greater than that of silicon oxide. However, the lithium secondary battery of the present invention may have high lifetime performance and output characteristics by applying the non-aqueous electrolyte, which will be described later.

The average particle diameter (D₅₀) of the silicon-based active material is 1 µm to 20 µm. When the average particle diameter (D₅₀) of the silicon-based active material is less than 1 µm, the surface area is excessively high, and thus the fluoroethylene carbonate described later reacts and is completely consumed, so the physical properties, such as ionic conductivity, change significantly, resulting in an imbalance in lithium ion transfer, and increased resistance which causes a decrease in lifetime performance. When the average particle diameter (D₅₀) of the silicon-based active material is greater than 20 µm, the volume expansion of the silicon-based active material becomes excessively large, making it difficult to maintain the conductive network, and lifetime performance and resistance characteristics are significantly reduced.

Specifically, the average particle diameter (D₅₀) of the silicon-based active material may be 2 µm to 10 µm, and specifically 3 µm to 8 µm, and within the above range, an organic/inorganic composite SEI layer may be well formed in combination with the non-aqueous electrolyte described later, so that the cracking of the SEI layer and the consumption of the non-aqueous electrolyte may be prevented, and thus lifetime performance may be improved to a desirable level.

The negative electrode may include: a negative electrode current collector; and a negative electrode active material layer disposed on at least one side of the negative electrode current collector. The silicon-based active material may be included in the negative electrode active material layer.

The negative electrode current collector is not particularly limited as long as it has high conductivity without causing chemical changes on the battery. Specifically, the negative electrode current collector may be copper, stainless steel, aluminum, nickel, titanium, calcined carbon, copper or stainless steel whose surface is treated with carbon, nickel, titanium, silver, and the like, aluminum-cadmium alloys, and the like.

The negative electrode current collector may typically have a thickness of 3 to 500 µm.

The negative electrode current collector may have fine irregularities formed on its surface to strengthen the bonding force of the negative electrode active material. For example, the negative electrode current collector may be used in various forms such as films, sheets, foils, nets, porous materials, foams, and non-woven materials.

The negative electrode active material layer may be disposed on at least one side of the negative electrode current collector. Specifically, the negative electrode active material layer may be disposed on one or both sides of the negative electrode current collector.

In order to sufficiently achieve the high capacity of the silicon-based active material in a secondary battery while minimizing the impact of the volume expansion/contraction on the battery, the silicon-based active material may be included in the negative electrode active material layer in an amount of 60 wt% to 99 wt%, and preferably 70 wt% to 85 wt%.

The negative electrode active material layer may further include a carbon-based active material along with the silicon-based active material.

The carbon-based active material may be, for example, graphite, hard carbon, or soft carbon. Specifically, the carbon-based active material may be graphite. The graphite may be artificial graphite, natural graphite, or a mixture thereof.

When the negative electrode active material layer includes the silicon-based active material and the carbon-based active material, the total weight of the silicon-based active material and the carbon-based active material may be 60 wt% to 99 wt%, and preferably 70 wt% to 98 wt%, based on the total weight of the negative electrode active material. When the negative electrode active material layer includes the silicon-based active material and the carbon-based active material, the weight ratio of the silicon-based active material and the carbon-based active material may be 1:99 to 30:70, and specifically 2:98 to 20:80.

The negative electrode active material layer may further include a conductive material and/or a binder along with the silicon-based active material.

The binder may be used to improve the adhesion between the negative electrode active material layer and the negative electrode current collector, which will be described later, or improve the binding force between the silicon-based active materials.

In order to further improve electrode adhesion and provide sufficient resistance to the volume expansion/contraction of the silicon-based active material, the binder may include at least one selected from the group consisting of styrene butadiene rubber (SBR), nitrile butadiene rubber (NBR), acrylonitrile butadiene rubber, acrylic rubber, butyl rubber, fluororubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM), with nitrile butadiene rubber being preferred.

The binder may be included in the negative electrode active material layer in an amount of 1 wt% to 30 wt%, and preferably 7 wt% to 15 wt%, and within the above range, the volume expansion of the active material may be minimized by binding the silicon-based active material more tightly, and it is possible to easily disperse the binder when producing a slurry for the negative electrode active material layer and improve coatability and the phase stability of the slurry.

The conductive material may be used to assist and improve conductivity in the secondary battery and is not particularly limited as long as it has conductivity without causing chemical changes. Specifically, the conductive material may include at least one selected from the group consisting of graphite including natural graphite or artificial graphite; carbon black including acetylene black, ketjen black, channel black, furnace black, lamp black, and thermal black; conductive fibers including carbon fiber and metal fiber; conductive tubes including carbon nanotubes; fluorocarbon; metal powders including aluminum and nickel powders; conductive whiskers including zinc oxide and potassium titanate; conductive metal oxides including titanium oxide; and polyphenylene derivatives, and may preferably include carbon black in order to achieve high conductivity.

The conductive material may be included in the negative electrode active material layer in an amount of 1 wt% to 20 wt%, and preferably 8 wt% to 15 wt%, and when the conductive material content is within the above range, it is preferable because it is possible to reduce an increase in resistance due to the binder and form an excellent conductive network.

The thickness of the negative electrode active material layer may be 5 µm to 500 µm, and preferably 5 µm to 100 µm.

The loading amount of the negative electrode active material layer may be 3 mAh/cm² to 15 mAh/cm², and preferably 8 mAh/cm² to 13 mAh/cm².

The negative electrode may be manufactured by coating the negative electrode current collector with a negative electrode slurry including a negative electrode active material and optionally a binder, a conductive material, and a solvent for forming a negative electrode slurry, followed by drying and rolling.

The solvent for forming a negative electrode slurry may include, for example, at least one selected from the group consisting of distilled water, ethanol, methanol, and isopropyl alcohol in order to easily disperse the negative electrode active material, the binder, and/or the conductive material, with distilled water being preferred.

Considering the viscosity, coatability, and dispersibility of the negative electrode slurry, the solvent for forming a negative electrode slurry may be included in the negative electrode slurry so that the solid content including the negative electrode active material, and optionally the binder and the conductive material is 15 wt% to 45 wt%.

### (2) Positive electrode

The positive electrode includes a positive electrode active material.

The positive electrode active material is a compound capable of reversibly intercalating/deintercalating lithium ions and may specifically include a lithium transition metal composite oxide including at least one transition metal consisting of nickel, cobalt, manganese, and aluminum and lithium, with a lithium transition metal composite oxide including a transition metal including nickel, cobalt, and manganese and lithium being preferred.

For example, the lithium transition metal composite oxide may be a lithium-manganese-based oxide (such as LiMnO₂ and LiMn₂O₄), a lithium-cobalt-based oxide (such as LiCoO₂), a lithium-nickel-based oxide (such as LiNiO₂), a lithium-nickel-manganese-based oxide (such as LiNi_{1-Y}Mn_{Y}O₂ (where 0<Y<1) and LiMn_{2-z}Ni_{z}O₄ (where 0 < Z < 2)), a lithium-nickel-cobalt-based oxide (such as LiNi_{1-Y1}Co_{Y1}O₂ (where 0<Y1<1)), a lithium-manganese-cobalt-based oxide (such as LiCo_{1-Y2}Mn_{Y2}O₂ (where 0<Y2<1) and LiMn_{2-z1}Co_{z1}O₄ (where 0 < Z1 < 2)), a lithium-nickel-manganese-cobalt-based oxide (such as Li(NiₚCo_{q}Mnᵣ₁)O₂ (where 0 < p < 1, 0 < q < 1, 0 < r1 < 1, p+q+r1=1) or Li(Niₚ₁Co_{q1}Mnᵣ₂)O₄ (where 0 < p1 < 2, 0 < q1 < 2, 0 < r2 < 2, p1+q1+r2=2)), or a lithium-nickel-cobalt-transition metal (M) oxide (such as Li(Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are atomic fractions of each independent element, 0 < p2 < 1, 0 < q2 < 1, 0 < r3 < 1, 0 < s2 < 1, p2+q2+r3+s2=1)), and any one or more compounds thereof may be included. Given that the capacity characteristics and stability of the battery may be improved, the lithium transition metal composite oxide may be LiCoO₂, LiMnO₂, LiNiO₂, a lithium nickel-manganese-cobalt oxide (such as Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂), or a lithium nickel cobalt aluminum oxide (such as Li(Ni_{0.8}Co_{0.15}Al_{0.05})O₂), and considering the remarkable improvement effect according to the type and content ratio of the components forming the lithium transition metal composite oxide, the lithium transition metal composite oxide may be Li(Ni_{0.6}Mn_{0.2}Co_{0.2})O₂, Li(Ni_{0.5}Mn_{0.3}CO_{0.2})O₂, Li(Ni_{0.7}Mn_{0.15}Co_{0.15})O₂, or Li(Ni_{0.8}Mn_{0.1}Co_{0.1})O₂, and any one or a mixture of two or more thereof may be used.

More specifically, the positive electrode active material is a lithium transition metal composite oxide and may include 60 mol% or more of nickel based on the total number of moles of the transition metals included in the lithium transition metal composite oxide. Specifically, the positive electrode active material is a lithium transition metal composite oxide, and the transition metal includes nickel and at least one selected from manganese, cobalt, and aluminum, and may include 60 mol% or more, and specifically 60 mol% to 90 mol%, of nickel based on the total number of moles of the transition metals. When this lithium transition metal composite oxide with a high nickel content is used with the above-described non-aqueous electrolyte, it is preferable because by-products in the gas generated by structural collapse may be reduced.

The positive electrode active material may include a lithium transition metal composite oxide represented by Chemical Formula B below.

[Chemical Formula B] Li₁₊ₓ(NiₐCo_{b}Mn_{c}M_{d})O₂

In Chemical Formula B, M is one or more selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are atomic fractions of each independent element, and 0≤x≤0.2, 0.50≤a<1, 0<b≤0.25, 0<c≤0.25, 0≤d≤0.1, a+b+c+d=1.

Preferably, a, b, c, and d may satisfy 0.70≤a≤0.95, 0.025≤b≤0.20, 0.025≤c≤0.20, and 0≤d≤0.05, respectively.

In addition, a, b, c, and d may satisfy 0.80≤a≤0.95, 0.025≤b≤0.15, 0.025≤c≤0.15, and 0≤d≤0.05, respectively.

In addition, a, b, c, and d may satisfy 0.85≤a≤0.90, 0.05≤b≤0.10, 0.05≤c≤0.10, and 0≤d≤0.03, respectively.

The positive electrode may include: a positive electrode current collector; and a positive electrode active material layer disposed on at least one side of the positive electrode current collector. The positive electrode active material layer may include the above-described positive electrode active material.

The positive electrode current collector may typically have a thickness of 3 to 500 µm.

The positive electrode current collector may have fine irregularities formed on its surface to strengthen the bonding force of the positive electrode active material. For example, the positive electrode current collector may be used in various forms such as films, sheets, foils, nets, porous materials, foams, and non-woven materials.

The positive electrode active material layer may be disposed on at least one side of the positive electrode current collector. Specifically, the positive electrode active material layer may be disposed on one or both sides of the positive electrode current collector.

The positive electrode active material may be included in the positive electrode active material layer in an amount of 80 wt% to 99 wt%, in consideration of sufficient capacity of the positive electrode active material.

The positive electrode active material layer may further include a binder and/or a conductive material along with the positive electrode active material described above.

The binder is a component that helps in the binding of the active material and the conductive material and the binding of the current collector and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylenepropylene-diene monomer (EPDM), a sulfonated EPDM, styrene-butadiene rubber, and fluororubber, with polyvinylidene fluoride being preferred.

The binder may be included in the positive electrode active material layer in an amount of 1 wt% to 20 wt%, and preferably 1.2 wt% to 10 wt%, in order to ensure a sufficient binding force between components including the positive electrode active material.

The conductive material may be used to assist and improve conductivity in secondary batteries and is not particularly limited as long as it has conductivity without causing chemical changes. Specifically, the positive electrode conductive material may include at least one selected from the group consisting of: graphite including natural graphite or artificial graphite; carbon black including acetylene black, ketjen black, channel black, furnace black, lamp black, and thermal black; conductive fibers including carbon fiber and metal fiber; conductive tubes including carbon nanotube; fluorocarbon; metal powders including aluminum and nickel powders; conductive whiskers including zinc oxide and potassium titanate; conductive metal oxides including titanium oxide; and polyphenylene derivatives, with carbon nanotube being preferred in order to improve conductivity.

The conductive material may be included in the positive electrode active material layer in an amount of 1 wt% to 20 wt%, and preferably 1.2 wt% to 10 wt%, in order to ensure sufficient electrical conductivity.

The thickness of the positive electrode active material layer may be 5 µm to 500 µm, and preferably 100 µm to 200 µm.

The loading amount of the positive electrode active material layer may be 2 mAh/cm² to 6 mAh/cm², and preferably 4 mAh/cm² to 5 mAh/cm².

The positive electrode may be manufactured by coating the positive electrode current collector with a positive electrode slurry including a positive electrode active material and optionally a binder, a conductive material, and a solvent for forming a positive electrode slurry, followed by drying and rolling.

The solvent for forming a positive electrode slurry may include an organic solvent such as N-methyl-2-pyrrolidone (NMP). The solid content of the positive electrode slurry may be 40 wt% to 90 wt%, and specifically 50 wt% to 80 wt%.

### (3) Separator

The separator may be interposed between the positive electrode and the negative electrode.

The separator may include typical porous polymer films conventionally used as a separator, and for example, porous polymer films prepared from polyolefin-based polymers such as an ethylene homopolymer, propylene homopolymer, ethylene/butene copolymer, ethylene/hexene copolymer, and ethylene/methacrylate copolymer, and the like may be used, either alone or by laminating them, or commonly used porous non-woven materials such as non-woven materials made of high melting point glass fibers and polyethylene terephthalate fibers, and the like may be used but is not limited thereto. In addition, in order to ensure heat resistance or mechanical strength, a coated separator containing ceramic components or polymers may be used, and optionally a single-layer or multi-layer structure may be used.

### (4) Non-aqueous electrolyte

### 1) Lithium salt

A description of the lithium salt is as follows.

In an non-aqueous electrolyte for a lithium secondary battery according to an embodiment of the present invention, the lithium salt may be those commonly used in electrolytes for lithium secondary batteries without limitation, and for example, the lithium salt may include Li⁺ as a cation and include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻ as an anion. Specifically, the lithium salt includes at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiTFSI (LiN(SO₂CF₃)₂), LiFSI (LiN(SO₂F)₂), LiCH₃SO₃, LiCF₃CO₂, LiCH₃CO₂ LiDFOB (LiB(C₂O₄)F₂), and LiBETI (LiN(SO₂CF₂CF₃)₂). The lithium salt may specifically include a single substance selected from the group consisting of LiBF₄, LiClO₄, LiPF₆, LiBOB (LiB(C₂O₄)₂), LiCF₃SO₃, LiTFSI (LiN(SO₂CF₃)₂), LiFSI (LiN(SO₂F)₂), LiDFOB (LiB(C₂O₄)F₂), and LiBETI (LiN(SO₂CF₂CF₃)₂), or a mixture of two or more thereof and more specifically include LiPF₆.

The lithium salt may be appropriately changed within the commonly used range, but in order to obtain the optimal effect of forming an anti-corrosion film on the surface of the electrode, the lithium salt may be included in the electrolyte at a concentration of 0.8 M to 3.0 M, and specifically at a concentration of 1.0 M to 3.0 M.

When the lithium salt concentration satisfies the above range, the viscosity of the non-aqueous electrolyte may be controlled to achieve optimal impregnation, and the capacity and cycle characteristics of the lithium secondary battery may be improved by increasing the mobility of lithium ions.

### 2) Organic solvent

The organic solvent includes fluoroethylene carbonate (FEC) and diethyl carbonate (DEC).

The volume ratio of fluoroethylene carbonate (FEC) and diethyl carbonate (DEC) is 5:95 to 25:75. Fluoroethylene carbonate (FEC) may be decomposed and form an SEI layer including an inorganic component such as LiF on the negative electrode. Since an inorganic component such as LiF is adsorbed to the negative electrode much better than the polymer-type organic SEI layer, it is very effective in preventing electrolyte side reactions of the negative electrode. Meanwhile, since diethyl carbonate has low viscosity and a low dielectric constant, it is preferable because electrolyte impregnation may be improved when used with fluoroethylene carbonate.

As described below, the lithium secondary battery according to the present invention needs to use an additive including the compound represented by Chemical Formula 1 along with the organic solvent. When the additive is not used, it is difficult to effectively form an inorganic SEI layer including an inorganic component such as LiF on the negative electrode, and as the decomposition of FEC continues, an imbalance in the transfer of lithium ions of the negative electrode occurs, which causes an increase in resistance and a decrease in lifetime performance due to permanent loss of lithium.

When the volume content of fluoroethylene carbonate is less than 5% by volume and the volume content of diethyl carbonate is more than 95% by volume in the total volume of fluoroethylene carbonate and diethyl carbonate, it is impossible to achieve the above-described effect of the present invention due to an insufficient inorganic SEI layer by fluoroethylene carbonate. On the other hand, when the volume content of fluoroethylene carbonate is more than 25% by volume and the volume content of diethyl carbonate is less than 75% by volume in the total volume of fluoroethylene carbonate and diethyl carbonate, it is difficult to form the above-described inorganic SEI layer easily because fluoroethylene carbonate has a solvated structure that is difficult to effectively generate an inorganic component such as LiF.

Specifically, the volume ratio of fluoroethylene carbonate and diethyl carbonate may be 7:93 to 20:80.

The organic solvent may be used by adding organic solvents commonly used in non-aqueous electrolytes without limitation.

The organic solvent may further include at least one organic solvent selected from a cyclic carbonate-based organic solvent, a linear carbonate-based organic solvent, an ester-based organic solvent, an ether-based organic solvent, a glyme-based solvent, and a nitrile-based organic solvent.

The cyclic carbonate-based organic solvent excludes fluoroethylene carbonate (FEC) and may specifically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

The linear carbonate-based organic solvent excludes diethyl carbonate (DEC) and may specifically include at least one selected from the group consisting of dimethyl carbonate (DMC), dipropyl carbonate, ethyl methyl carbonate (EMC), methyl propyl carbonate, and ethyl propyl carbonate.

The ester-based organic solvent may include at least one selected from the group consisting of methyl acetate, ethyl acetate, propyl acetate, methyl propionate, ethyl propionate, propyl propionate, butyl propionate, γ-butyrolactone, γ-valerolactone, γ-caprolactone, σ-valerolactone, and ε-caprolactone.

The ether-based solvent may be any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL), or a mixture of two or more thereof, but is not limited thereto.

The glyme-based solvent has a high dielectric constant and low surface tension compared to linear carbonate-based organic solvents, and its reactivity with metals is low, and the glyme-based solvent may include at least one selected from the group consisting of dimethoxyethane (glyme, DME), diethoxyethane, digylme, triglyme, and tetraglyme (TEGDME) but is not limited thereto.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

The remainder of the non-aqueous electrolyte excluding a lithium salt and an additive may be an organic solvent unless otherwise specified.

### (3) Additives

The non-aqueous electrolyte of the present invention includes an additive.

The additive includes at least one selected from the group consisting of compounds represented by Chemical Formulas 1 to 3 below.

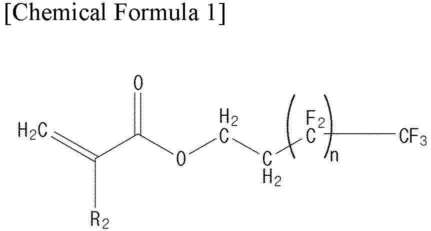

In Chemical Formula 1, R₁ is hydrogen or a C₁ to C₃ alkyl group, and n is an integer from 1 to 10.

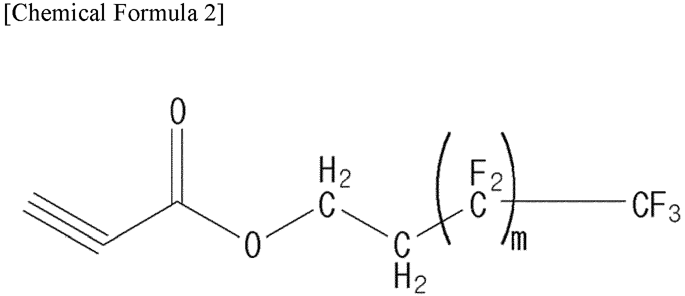

In Chemical Formula 2, m is an integer from 0 to 18.

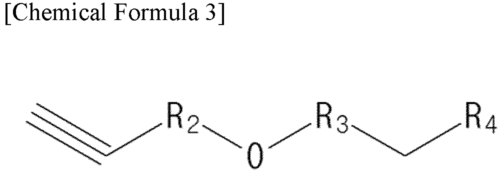

In Chemical Formula 3, R₂ and R₃ are each independently a C₁ to C₁₀ alkylene group, and R₄ is a C₁ to C₂₀ alkyl group substituted with one or more fluorine atoms.

Specifically, when at least one of the compounds represented by Chemical Formulas 1 to 3 is used along with the above-described organic solvent, an inorganic SEI layer including an inorganic component such as LiF may be more efficiently formed. In addition, at least one of the compounds represented by Chemical Formulas 1 to 3 prevents fluoroethylene carbonate from being continuously decomposed and forms an inorganic SEI layer on the negative electrode to ensure a balanced transfer of lithium ions of the negative electrode, and thus the lifetime performance of the lithium secondary battery may be significantly improved.

Since at least one of the compounds represented by Chemical Formulas 1 to 3 includes a vinyl group or a propargyl-containing functional group in its structure, the compound may be easily reduced and decomposed on the surface of the negative electrode including a silicon-based active material to form an SEI layer with low resistance and high passivation ability. Therefore, when a non-aqueous electrolyte including at least one of the compounds represented by Chemical Formulas 1 to 3 as an additive of the electrolyte is used, it is possible to prevent the self-discharge of the negative electrode due to additional reductive decomposition of the electrolyte caused by instability of the SEI layer.

Since at least one of the compounds represented by Chemical Formulas 1 to 3 includes a fluorocarbon functional group substituted with one or more fluorine atoms at the end of the structure, an oxidation-resistant film is formed on the positive electrode surface, suppressing the elution of transition metals from the positive electrode and the electrodeposition and precipitation of the eluted transition metals on the negative electrode, and thus internal short circuits may be prevented.

Since at least one of the compounds represented by Chemical Formulas 1 to 3 includes a fluorine-containing alkyl group with excellent flame retardancy and incombustibility, and a vinyl or propargyl group, a robust and low-resistance SEI layer is formed on the negative electrode, which not only suppresses the additional reductive decomposition reaction of the electrolyte, but also prevents the self-discharge of the negative electrode, and thus it is possible to improve the lifetime performance, suppress an increase in the initial resistance, and provide a lithium secondary battery with improved output characteristics at room temperature and low temperatures.

In Chemical Formula 1, R₁ may be hydrogen or a C₁ to C₃ alkyl group and may specifically be oxygen.

In Chemical Formula 1, n may be an integer from 1 to 10, and specifically an integer from 3 to 8. When n is 0, the compound acts like a non-solvent, making it difficult to effectively produce an inorganic SEI layer including an inorganic component such as LiF. When n is an integer greater than 10, miscibility with an organic solvent and the like decreases, making it difficult to effectively produce an inorganic SEI layer, and thus the desired inorganic SEI layer may be hardly produced.

The compound represented by Chemical Formula 1 may include at least one selected from the group consisting of compounds represented by Chemical Formulas 1-1 to 1-3, and more specifically, the compound represented by Chemical Formula 1-1 below may be included.

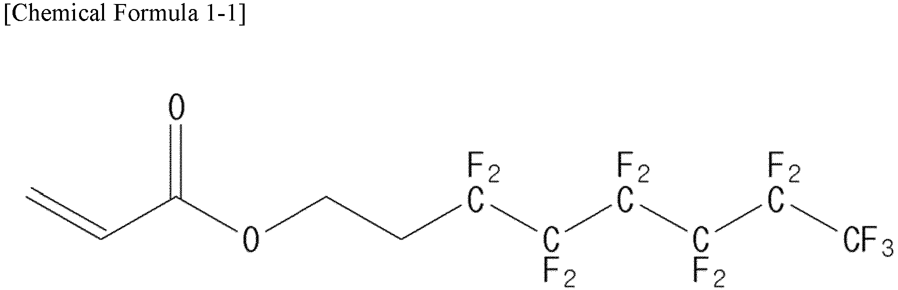

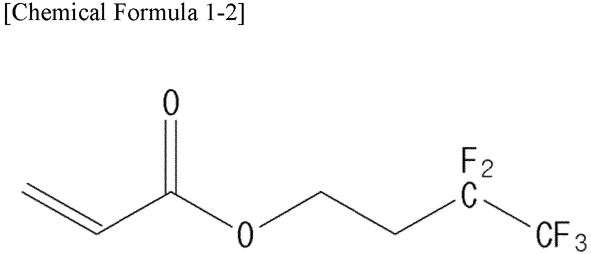

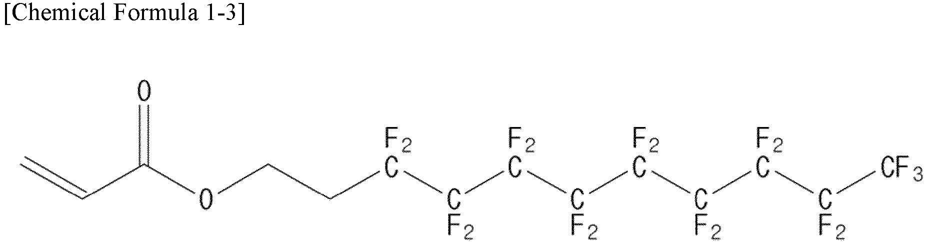

In Chemical Formula 2, m may be an integer from 0 to 18, specifically an integer from 1 to 10, and more specifically an integer from 2 to 8.

When m satisfies the above range, the thermal properties of the compound itself may be improved, and the film formed therefrom is expected to be stable. In Chemical Formula 2, when m exceeds 18, viscosity and non-polarity increase as an excess amount of fluorine atoms is contained, solubility in the electrolyte decreases, and ionic conductivity decreases, and thus battery performance may be reduced.

Preferably, the compound represented by Chemical Formula 2 may include at least one selected from the group consisting of compounds represented by Chemical Formulas 2-1 to 2-4 below, and more preferably include at least one selected from the group consisting of compounds represented by Chemical Formulas 2-1 and Chemical Formula 2-2.

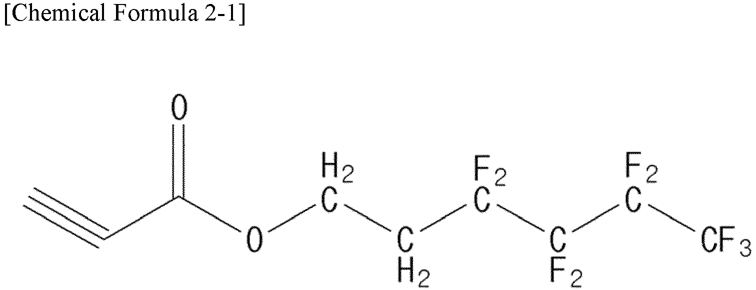

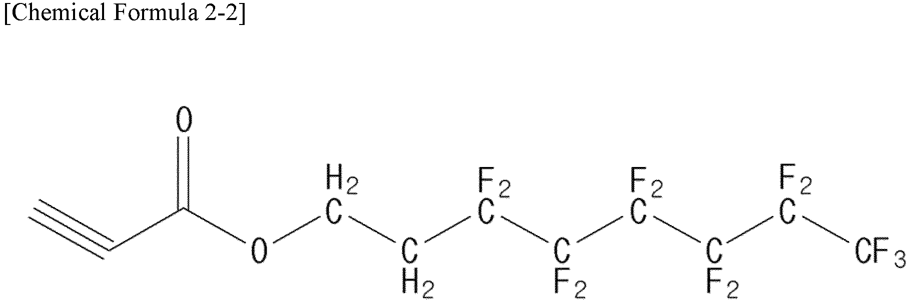

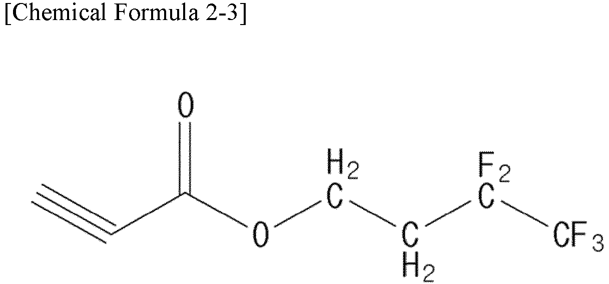

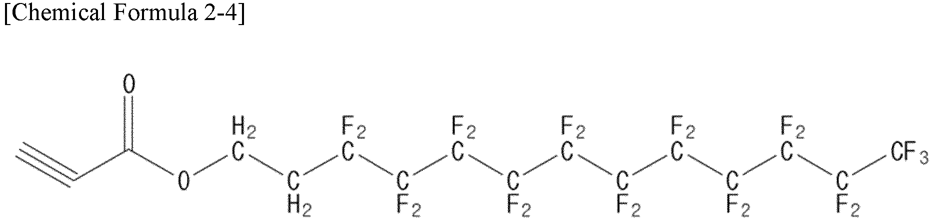

In Chemical Formula 3, R₂ and R₃ are each independently a C₁ to C₅ alkylene group, and R₄ is a C₃ to C₂₀ alkyl group substituted with one or more fluorine atoms.

In Chemical Formula 3, R₂ and R₃ are each independently a C₁ to C₃ alkylene group, and R₄ is a C₃ to C₁₅ alkyl group substituted with one or more fluorine atoms.

Specifically, in Chemical Formula 3, R₄ may be a C₄ to C₈ alkyl group substituted with one or more fluorine atoms.

Preferably, the compound represented by Chemical Formula 3 may be a compound represented by Chemical Formula 3-1 below.

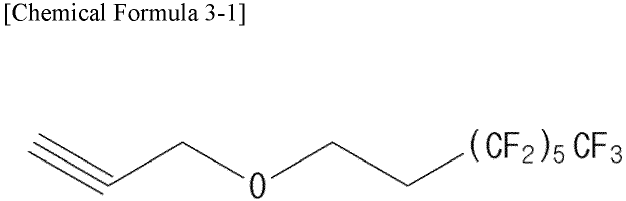

At least one of the compounds represented by Chemical Formulas 1 to 3 may be included in the non-aqueous electrolyte in an amount of 0.01 wt% to 10.0 wt%.

When the content of at least one of the compounds represented by Chemical Formulas 1 to 3 is within the above range, disadvantages such as side reactions caused by an additive, a decrease in capacity, and an increase in resistance are reduced as much as possible, and the effect of lithium transfer in the layer may be improved by effectively forming an inorganic SEI layer including an inorganic component such as LiF on the negative electrode surface, and the self-discharge of the negative electrode may be prevented by suppressing the additional reductive decomposition of the electrolyte.

Specifically, when the content of at least one of the compounds represented by Chemical Formulas 1 to 3 is 0.01 wt% or more, a stable film is formed during battery operation and a low-resistance SEI layer is formed on the surface of the negative electrode to improve the output performance of the battery. In addition, when the content of at least one of the compounds represented by Chemical Formulas 1 to 3 is 10.0 wt% or less, the viscosity of the non-aqueous electrolyte may be controlled to achieve optimal impregnation, an increase in battery resistance due to decomposition of the additive may be effectively suppressed, and ionic conductivity in the battery may be further increased, and thus, a reduction in output characteristics may be prevented.

Specifically, at least one of the compounds represented by Chemical Formulas 1 to 3 may be included in the non-aqueous electrolyte in an amount of 0.05 wt% to 6.0 wt%, and specifically 0.1 wt% to 5.0 wt%.

The non-aqueous electrolyte may further include an additional additive. When the non-aqueous electrolyte further includes an additional additive, at least one of the compounds represented by Chemical Formulas 1 to 3 may be expressed as a "first additive," and the additional additive may be expressed as a "second additive."

Specifically, the additive may further include, if necessary, other additional additives in addition to the compound represented by Chemical Formula 1 in order to prevent the non-aqueous electrolyte from decomposing and causing the negative electrode collapse in high power conditions, improve low-temperature high-rate discharge characteristics and stability at high temperatures, prevent overcharging, and further improve the effect of reducing battery expansion at high temperatures.

The additional additive may be, for example, at least one selected from the group consisting of a cyclic carbonate-based compound, a halogen-substituted carbonate-based compound, a sultone-based compound, a sulfate-based compound, a phosphate-based or phosphite-based compound, a borate-based compound, a nitrile-based compound, a benzene-based compound, an amine-based compound, a silane-based compound, and a lithium salt-based compound.

The cyclic carbonate-based compound may be, for example, vinylene carbonate (VC) or vinylethylene carbonate.

The halogen-substituted carbonate-based compound may be, for example, fluoroethylene carbonate (FEC).

The sultone-based compound may be, for example, at least one compound selected from the group consisting of 1,3-propane sultone (PS), 1,4-butane sultone, ethene sultone, 1,3-propene sultone (PRS), 1,4-butene sultone, and 1-methyl-1,3-propene sultone.

The sulfate-based compound may be, for example, ethylene sulfate (Esa), trimethylene sulfate (TMS), or methyl trimethylene sulfate (MTMS).

The phosphate-based or phosphite-based compound may be, for example, at least one compound selected from the group consisting of lithium difluoro(bisoxalato)phosphate, lithium difluorophosphate, tris(trimethylsilyl) phosphate, tris(trimethylsilyl) phosphite, tris(2,2,2-trifluoroethyl) phosphate, and tris(trifluoroethyl) phosphite.

The borate-based compound may be tetraphenylborate, lithium difluoro(oxalato)borate (LiODFB, LiB(C₂O₄)F₂), or lithium bisoxalatoborate (LiB(C₂O₄)₂, LiBOB).

The nitrile-based compound may be, for example, at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be, for example, fluorobenzene, and the amine-based compound may be triethanolamine or ethylenediamine, and the silane-based compound may be tetravinylsilane.

The lithium salt-based compound is a compound different from the lithium salt included in the non-aqueous electrolyte and may be lithium difluorophosphate (LiPO₂F₂) or LiBF₄.

Among these additional additives, when at least one selected from the group consisting of vinylethylene carbonate, 1,3-propanesultone, vinylene carbonate, succinonitrile, and lithium difluoro(oxalato)borate, is used, a more robust SEI layer may be formed on the surface of the negative electrode during the initial activation of the secondary battery.

A combination of two or more compounds may be used as the additional additive, and the total content of the compound represented by Chemical Formula 1 and the additional additive may be 50 wt% or less, specifically 0.05 to 20 wt%, and more specifically 0.05 to 10 wt% based on the total weight of the non-aqueous electrolyte. When the total content of the additives satisfies the above range, the low-temperature output characteristics of the battery may be improved, the storage characteristics at high temperatures and the lifetime characteristics at high temperatures may be more effectively improved, and side reactions caused by the additives remaining after the reaction in the battery may be prevented.

The lithium secondary battery according to the present invention described above may be useful in portable devices, such as mobile phones, laptop computers, and digital cameras, and electric vehicles such as hybrid electric vehicles (HEVs).

According to another embodiment of the present invention, a battery module including the lithium secondary battery as a unit cell and a battery pack including the same are provided.

The battery module or the battery pack may be used as a power source for one or more mid- to large-sized devices among power tools, electric vehicles (EVs) including hybrid electric vehicles and plug-in hybrid electric vehicles (PHEVs), or power storage systems.

The outer shape of the lithium secondary battery of the present invention is not particularly limited, but may be a cylindrical shape using a can, a prismatic shape, a pouch shape, or a coin shape.

The lithium secondary battery according to the present invention may not only be used in battery cells as a power source for small devices, but also be preferably used as a unit cell in mid- and large-sized battery modules including a plurality of battery cells.

Hereinafter, the present invention will be described in detail through examples.

The examples according to the present invention may be modified into various other forms, and the scope of the present invention should not be construed as being limited to the following examples described in detail. The examples of the present invention are provided in order to more completely explain the present invention to those with average knowledge in the art.

Hereinafter, the present invention will be described in detail through specific examples.

### Examples and Comparative Examples

### Example 1

### (Preparation of non-aqueous electrolyte)

An organic solvent was prepared by mixing fluoroethylene carbonate (FEC) and diethyl carbonate (DEC) in a volume ratio of 10:90.

LiPF₆ and LiFSI as a lithium salt were dissolved in the organic solvent. LiPF₆ was dissolved in the prepared non-aqueous electrolyte to a molar concentration of 1.0 M, and LiFSI was dissolved in the prepared non-aqueous electrolyte to a molar concentration of 0.5 M.

A non-aqueous electrolyte was prepared by adding the compound represented by Chemical Formula 1-1 and vinylene carbonate to the organic solvent in which the lithium salt was dissolved.

The compound represented by Chemical Formula 1-1 was included in the non-aqueous electrolyte in an amount of 2 wt%. The vinylene carbonate was included in the non-aqueous electrolyte in an amount of 2 wt%.

### (Manufacture of secondary battery)

A positive electrode active material (LiNi_{0.86}Co_{0.05}Mn_{0.07}Al_{0.02}O₂), a conductive material (carbon nanotube), and a binder (polyvinylidene fluoride) were added in a weight ratio of 97:1:2 to a solvent, N-methyl-2-pyrrolidone (NMP), to prepare a positive electrode mixture slurry (78 wt% solid content). The positive electrode mixture slurry was applied on one side of a positive electrode current collector (Al thin film) with a thickness of 12 µm at a loading amount of 4.5 mAh/cm², dried and roll pressed to manufacture a positive electrode.

Si (average particle diameter (D₅₀): 5 µm) as a negative electrode active material, nitrile butadiene rubber (NBR) as a binder, and carbon black as a conductive material were added in a weight ratio of 80:10:10 to a solvent, water, to prepare a negative electrode slurry (48 wt% solid content). The negative electrode slurry was applied on a copper (Cu) thin film, which is a negative electrode current collector with a thickness of 15 µm, at a loading amount of 10.7 mAh/cm², dried and roll pressed to manufacture a negative electrode.

An electrode assembly was manufactured by sequentially stacking the positive electrode, a polyolefin-based porous separator coated with inorganic particles (Al₂O₃), and the negative electrode.

After accommodating the manufactured electrode assembly in a battery case, the prepared non-aqueous electrolyte was injected to manufacture a lithium secondary battery.

### Example 2

A non-aqueous electrolyte and a lithium secondary battery were manufactured in the same manner as in Example 1, except that 2 wt% of the compound represented by Chemical Formula 1-2 was added to the non-aqueous electrolyte instead of the compound represented by Chemical Formula 1-1.

### Example 3

A non-aqueous electrolyte and a lithium secondary battery were manufactured in the same manner as in Example 1, except that 2 wt% of the compound represented by Chemical Formula 1-3 was added to the non-aqueous electrolyte instead of the compound represented by Chemical Formula 1-1.

### Example 4

A non-aqueous electrolyte and a lithium secondary battery were manufactured in the same manner as in Example 1, except that 2 wt% of the compound represented by Chemical Formula 2-1 was added to the non-aqueous electrolyte instead of the compound represented by Chemical Formula 1-1.

### Example 5

A non-aqueous electrolyte and a lithium secondary battery were manufactured in the same manner as in Example 1, except that 2 wt% of the compound represented by Chemical Formula 2-2 was added to the non-aqueous electrolyte instead of the compound represented by Chemical Formula 1-1.

### Example 6

A non-aqueous electrolyte and a lithium secondary battery were manufactured in the same manner as in Example 1, except that 2 wt% of the compound represented by Chemical Formula 2-3 was added to the non-aqueous electrolyte instead of the compound represented by Chemical Formula 1-1.

### Example 7

A non-aqueous electrolyte and a lithium secondary battery were manufactured in the same manner as in Example 1, except that 2 wt% of the compound represented by Chemical Formula 2-4 was added to the non-aqueous electrolyte instead of the compound represented by Chemical Formula 1-1.

### Example 8

A non-aqueous electrolyte and a lithium secondary battery were manufactured in the same manner as in Example 1, except that 2 wt% of the compound represented by Chemical Formula 3-1 was added to the non-aqueous electrolyte instead of the compound represented by Chemical Formula 1-1.

### Comparative Example 1

A lithium secondary battery was manufactured in the same manner as in Example 1, except that the average particle diameter of the silicon-based active material (Si) used in the negative electrode was 0.05 µm (=50 nm).

### Comparative Example 2

A lithium secondary battery was manufactured in the same manner as in Example 1, except that the average particle diameter of the silicon-based active material (Si) used in the negative electrode was 0.7 µm (=700 nm).

### Comparative Example 3

A lithium secondary battery was manufactured in the same manner as in Example 1, except that the average particle diameter of the silicon-based active material (Si) used in the negative electrode was 40 µm.

### Comparative Example 4

A non-aqueous electrolyte and a lithium secondary battery were manufactured in the same manner as in Example 1, except that a mixture of fluoroethylene carbonate (FEC) and diethyl carbonate (DEC) at a volume ratio of 3:97 was used as an organic solvent.

### Comparative Example 5

A non-aqueous electrolyte and a lithium secondary battery were manufactured in the same manner as in Example 1, except that a mixture of fluoroethylene carbonate (FEC) and diethyl carbonate (DEC) at a volume ratio of 30:70 was used as an organic solvent.

### Comparative Example 6

A non-aqueous electrolyte and a lithium secondary battery were manufactured in the same manner as in Example 1, except that the compound represented by Chemical Formula 1-1 was not included in the non-aqueous electrolyte.

### Comparative Example 7

A non-aqueous electrolyte and a lithium secondary battery were manufactured in the same manner as in Example 1, except that a mixture of ethylene carbonate (EC) and diethyl carbonate (DEC) at a volume ratio of 10:90 was used as an organic solvent.

### Experimental Examples

### Experimental Example 1: Evaluation of cycle capacity retention rate at room temperature

The above manufactured lithium secondary batteries of Examples 1 to 8 and Comparative Examples 1 to 7 were charged to 4.25 V and 0.05 C under conditions of CC/CV at 0.33 C and 25 °C and discharged to 2.5 V under conditions of CC at 0.33 C as one cycle, using an electrochemical charging and discharging device, and 100 charge/discharge cycles were performed. Then, capacity retention rate was measured.

The capacity retention rate was calculated according to the equation below, and results thereof are shown in Table 1 below. Capacity retention rate (%) = {(Discharge capacity after 100 cycles/Discharge capacity after 1 cycle)} × 100

### Experimental Example 2: Evaluation of cycle capacity retention rate at high temperature

The above manufactured lithium secondary batteries of Examples 1 to 8 and Comparative Examples 1 to 7 were charged to 4.25 V and 0.05 C under conditions of CC/CV at 0.33 C and 45 °C and discharged to 2.5 V under conditions of CC at 0.33 C as one cycle, using an electrochemical charging and discharging device, and 100 charge/discharge cycles were performed. Then, capacity retention rate was measured.

The capacity retention rate was calculated according to the equation below, and results thereof are shown in Table 1 below. Capacity retention rate (%) = {(Discharge capacity after 100 cycles/Discharge capacity after 1 cycle)} × 100

**[Table 1]**

| | Experimental Example 1 | Experimental Example 2 |
|---|---|---|
| | Capacity retention rate (%, @100 cycle, 25 °C) | Capacity retention rate (%, @100 cycle, 45 °C) |
| Example 1 | 95.2 | 92.3 |
| Example 2 | 92.2 | 87.4 |
| Example 3 | 93.8 | 89.6 |
| Example 4 | 94.7 | 91.0 |
| Example 5 | 93.4 | 88.1 |
| Example 6 | 95.1 | 90.2 |
| Example 7 | 93.5 | 89.9 |
| Example 8 | 93.1 | 87.3 |
| Comparative Example 1 | 75.5 | 68.2 |
| Comparative Example 2 | 89.3 | 77.8 |
| Comparative Example 3 | 79.4 | 72.4 |
| Comparative Example 4 | 83.2 | 81.8 |
| Comparative Example 5 | 86.6 | 84.7 |
| Comparative Example 6 | 86.7 | 79.7 |
| Comparative Example 7 | 84.2 | 80.1 |

Referring to Table 1, it can be seen that lithium secondary batteries of Examples 1 to 8 according to the present invention exhibited excellent lifetime performance at room temperature and lifetime performance at high temperature compared to Comparative Examples 1 to 6.

### Reference Examples

### Reference Example 1

A non-aqueous electrolyte and a lithium secondary battery were manufactured in the same manner as in Comparative Example 1, except that a mixture of ethylene carbonate (EC) and diethyl carbonate (DEC) at a volume ratio of 10:90 was used as an organic solvent.

### Reference Experimental Example 1: Evaluation of cycle capacity retention rate at room temperature

For the lithium secondary batteries of Comparative Example 1 and Reference Example 1, the 100-cycle capacity retention rate was measured in the same manner as in Experimental Example 1.

### Reference Experimental Example 2: Evaluation of cycle capacity retention rate at high temperature

For lithium secondary batteries of Comparative Example 1 and Reference Example 1, the 100-cycle capacity retention rate was measured in the same manner as in Experimental Example 2.

**[Table 2]**

| | Reference Experimental Example 1 | Reference Experimental Example 2 |
|---|---|---|
| | Capacity retention rate (%, @100 cycle, 25 °C) | Capacity retention rate (%, @100 cycle, 45 °C) |
| Comparative Example 1 | 75.5 | 68.2 |
| Reference Example 1 | 90.7 | 88.3 |

Referring to Table 2, it can be seen that Reference Example 1, in which EC is used instead of FEC, had higher cycle capacity retention rates at room temperature and high temperature compared to Comparative Example 1. In other words, it can be seen that when the silicon-based active material (Si) has an average particle diameter (D₅₀) smaller than 1 µm, using FEC as an organic solvent has a negative effect on the performance of the lithium secondary battery.

## Claims

1. A lithium secondary battery comprising:
a negative electrode;
a positive electrode;
a separator; and
a non-aqueous electrolyte,
wherein the negative electrode includes a negative electrode active material,
the negative electrode active material includes a silicon-based active material,
the silicon-based active material has an average particle diameter D₅₀ of 1 µm to 20 µm,
the non-aqueous electrolyte includes a lithium salt, an organic solvent, and an additive,
the organic solvent includes fluoroethylene carbonate and diethyl carbonate in a volume ratio of 5:95 to 25:75, and
the additive includes at least one selected from the group consisting of compounds represented by Chemical Formulas 1 to 3 below: 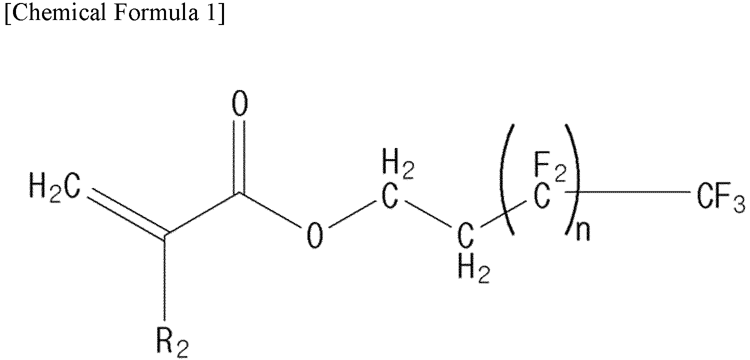
in Chemical Formula 1, R₁ is hydrogen or a C₁ to C₃ alkyl group, and n is an integer from 1 to 10, 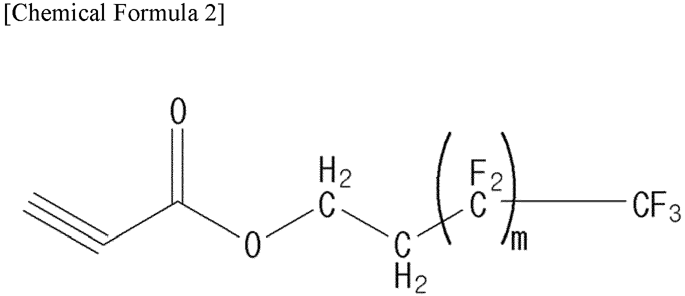
in Chemical Formula 2, m is an integer from 0 to 18, 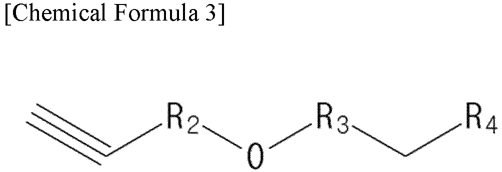
in Chemical Formula 3, R₂ and R₃ are each independently a C₁ to C₁₀ alkylene group, and R₄ is a C₁ to C₂₀ alkyl group substituted with one or more fluorine atoms.

2. The lithium secondary battery of claim 1, wherein in Chemical Formula 1, n is an integer from 3 to 7.

3. The lithium secondary battery of claim 1, wherein in Chemical Formula 1, R₁ is hydrogen.

4. The lithium secondary battery of claim 1, wherein the compound represented by Chemical Formula 1 includes at least one selected from the group consisting of compounds represented by Chemical Formulas 1-1 to 1-3 below:

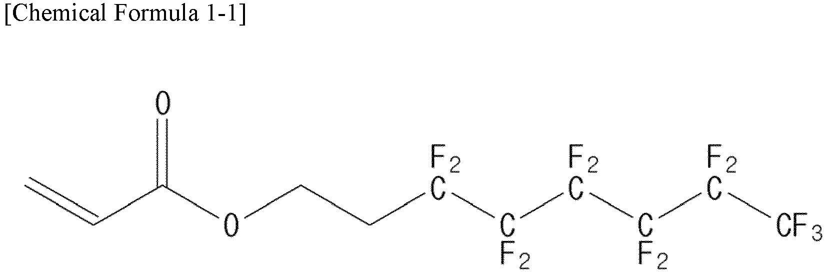

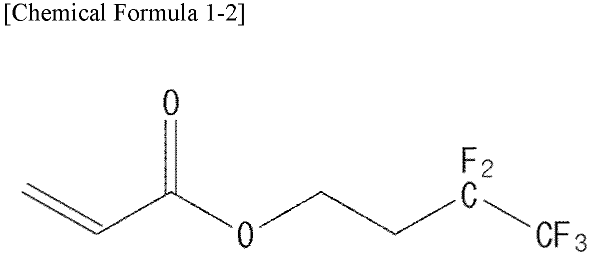

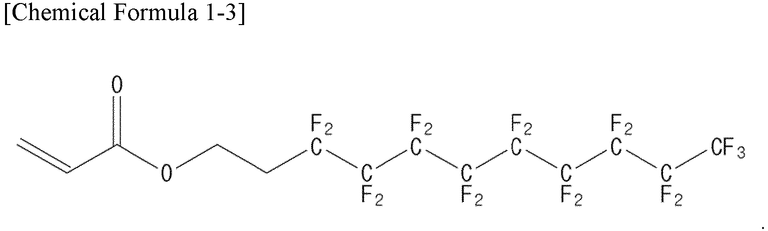

5. The lithium secondary battery of claim 1, wherein in Chemical Formula 2, m is an integer from 2 to 8.

6. The lithium secondary battery of claim 1, wherein the compound represented by Chemical Formula 2 includes at least one selected from the group consisting of compounds represented by Chemical Formulas 2-1 to 2-4 below:

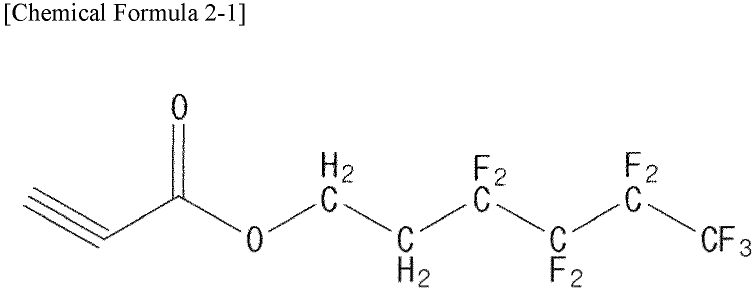

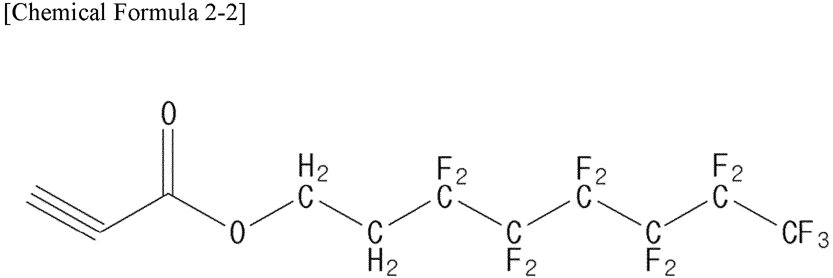

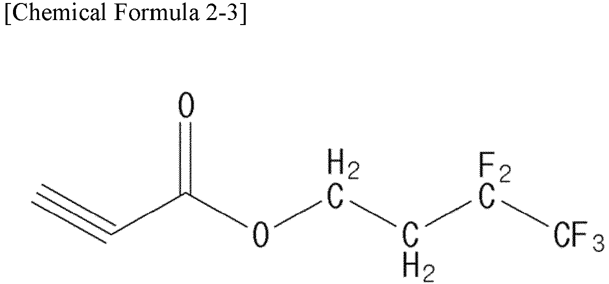

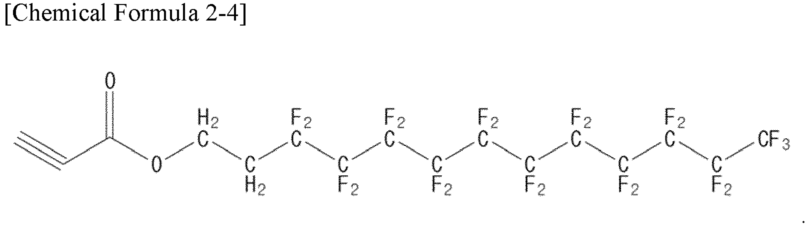

7. The lithium secondary battery of claim 1, wherein in Chemical Formula 3, R₂ and R₃ are each independently a C₁ to C₅ alkylene group, and R₄ is a C₃ to C₂₀ alkyl group substituted with one or more fluorine atoms.

8. The lithium secondary battery of claim 1, wherein in Chemical Formula 3, R₄ is a C₄ to C₈ alkyl group substituted with one or more fluorine atoms.

9. The lithium secondary battery of claim 1, wherein the compound represented by Chemical Formula 3 includes a compound represented by Chemical Formula 3-1 below:

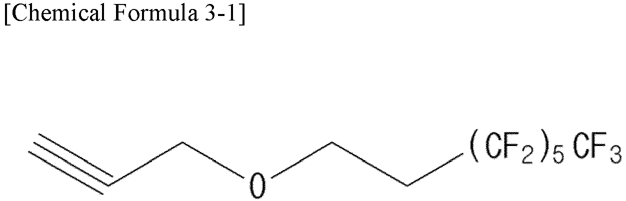

10. The lithium secondary battery of claim 1, wherein at least one selected from the group consisting of compounds represented by Chemical Formulas 1 to 3 is included in the non-aqueous electrolyte in an amount of 0.01 wt% to 10 wt%.

11. The lithium secondary battery of claim 1, wherein the lithium salt includes at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI (LiN(SO₂F)₂), and LiBETI (LiN(SO₂CF₂CF₃)₂).

12. The lithium secondary battery of claim 1, wherein the lithium salt is included in the non-aqueous electrolyte at a concentration of 0.8 M to 3.0 M.

13. The lithium secondary battery of claim 1, wherein the silicon-based active material includes a compound represented by Chemical Formula A below:
[Chemical Formula A] SiOₓ wherein 0 ≤ x < 2.

14. The lithium secondary battery of claim 1, wherein the silicon-based active material is Si.
